# EUROPEAN PATENT APPLICATION

(11) **EP 4 668 816 A1**
(43) Date of publication of application: **24.12.2025**
(21) Application number: 23923313.3
(22) Date of filing: 22.02.2023
(51) Int. Cl.: H04W 12/06, H04L 1/16

(54) **COMMUNICATION METHOD AND APPARATUS, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN); LUO, Chaoming, Dongguan, Guangdong 523860 (CN)
(74) Representative: Aldridge, Henry Alexander
(86) International application number: PCT/CN2023/077695
(87) International publication number: WO 2024/174131

(57) **Abstract**

Embodiments of the present application provide a communication method and apparatus, and a communication device. The method comprises: a first device sends a beacon frame to a second device, and receives a first frame sent by the second device, wherein the first frame carries a first message integrity code (MIC), and the first MIC is used for the first device to verify the legitimacy of the second device.

## Description

### TECHNICAL FIELD

Embodiments of the disclosure relate to the technical field of wireless communication, in particular to a communication method and apparatus, and a communication device.

### BACKGROUND

Before data interaction between a station (STA) and an access point (AP), it needs to perform a series of signaling processes, such as a scanning process, an authentication process, an association process and a key generation process. When the STA performs data interaction frequently with the AP, a complex signaling process is needed before each data interaction, thereby resulting in low communication efficiency. How to simplify the communication process on the premise of ensuring the transmission reliability is a problem that needs to be solved.

### SUMMARY

Embodiments of the disclosure provide a communication method and apparatus, a communication device, a chip, a computer-readable storage medium, a computer program product, and a computer program.

An embodiment of the disclosure provides a communication method, and the communication method includes the following operations.

A first device transmits a beacon frame to a second device, and the first device receives a first frame from the second device. The first frame carries a first message integrity code (MIC), and the first MIC is used by the first device to authenticate the second device.

An embodiment of the disclosure provides a communication method, and the method includes the following operations.

A second device receives a beacon frame from a first device, and the second device transmits a first frame to the first device. The first frame carries a first MIC, and the first MIC is used by the first device to authenticate the second device.

An embodiment of the disclosure provides a communication apparatus. The communication apparatus is applied to a first device, and includes a communication unit.

The communication unit is configured to: transmit a beacon frame to a second device, and receive a first frame from the second device. The first frame carries a first MIC, and the first MIC is used by the first device to authenticate the second device.

An embodiment of the disclosure provides a communication apparatus. The communication apparatus is applied to a second device, and includes a communication unit.

The communication unit is configured to: receive a beacon frame from a first device, and transmit a first frame to the first device. The first frame carries a first MIC, and the first MIC is used by the first device to authenticate the second device.

There is provided a communication device in an embodiment of the disclosure, and the communication device includes a processor and a memory. The memory is used to store a computer program, and the processor is used to call and execute the computer program stored in the memory to perform the communication method described above.

There is provided a chip in an embodiment of the disclosure, and the chip is used to perform the communication method described above.

Specifically, the chip includes a processor, and the processor is used to call and execute a computer program from a memory to cause a device on which the chip is mounted to perform the communication method described above.

There is provided a computer-readable storage medium in an embodiment of the disclosure. The computer-readable storage medium having stored thereon a computer program that, when executed by a computer, causes the computer to perform the communication method described above.

There is provided a computer program product in an embodiment of the disclosure. The computer program product has stored therein computer program instructions that, when executed by a computer, cause the computer to perform the communication method described above.

There is provided a computer program in an embodiment of the disclosure. The computer program, when executed by a computer, causes the computer to perform the communication method described above.

With the technical solutions described above, the first device transmits the beacon frame to the second device and receives the first frame from the second device, and the first frame carries the first MIC, so that the first device acquires the first MIC by performing simple interaction with the second device, and authenticates the second device based on the first MIC. The minimalist communication process ensures transmission reliability between the first device and the second device, thereby providing security for data interaction between the first device and the second device. For the second device, the simplified communication process can effectively improve communication efficiency and reduce the energy consumption required by the second device.

### BRIEF DESCRIPTION OF THE DRAWINGS

The accompanying drawings illustrated herein are intended to provide a further understanding of the disclosure and form part of the disclosure. The schematic embodiments of the disclosure and their description are intended to explain the disclosure, and do not constitute an unduly limiting of the disclosure. In the accompanying drawings:
FIG. 1 is an architecture diagram of a communication system applied in an embodiment of the disclosure.
FIG. 2-1 is a schematic diagram of interaction between an AP and an STA based on active scanning.
FIG. 2-2 is a schematic diagram of the interaction between an AP and an STA based on passive scanning.
FIG. 3 is a first schematic flowchart of a communication method according to an embodiment of the disclosure.
FIG. 4 is a second schematic flowchart of the communication method according to an embodiment of the disclosure.
FIG. 5 is a third schematic flowchart of the communication method according to an embodiment of the disclosure.
FIG. 6 is a fourth schematic flowchart of the communication method according to an embodiment of the disclosure.
FIG. 7 is a fifth schematic flowchart of the communication method according to an embodiment of the disclosure.
FIG. 8 is a sixth schematic flowchart of the communication method according to an embodiment of the disclosure.
FIG. 9 is a seventh schematic flowchart of the communication method according to an embodiment of the disclosure.
FIG. 10 is a first schematic diagram of the structure of a communication apparatus according to an embodiment of the disclosure.
FIG. 11 is a second schematic diagram of the structure of the communication apparatus according to an embodiment of the disclosure.
FIG. 12 is a schematic structural illustration of a communication device according to an embodiment of the disclosure.
FIG. 13 is a schematic structural illustration of a chip according to an embodiment of the disclosure.
FIG. 14 is a schematic block diagram of a communication system according to an embodiment of the disclosure.

### DETAILED DESCRIPTION

The technical solutions in the embodiments of the disclosure will be described below with reference to the accompanying drawings in the embodiments of the disclosure. It will be apparent that the described embodiments herein are only part of but not all of the embodiments in the disclosure. Based on the embodiments in the disclosure, all other embodiments obtained by those of ordinary skilled in the art without making any creative effort fall within the scope of protection of the disclosure.

The technical solutions in embodiments of the disclosure may be applied to various communication systems, such as wireless fidelity (WiFi) systems, 3rd generation partnership project (3GPP) systems, etc.

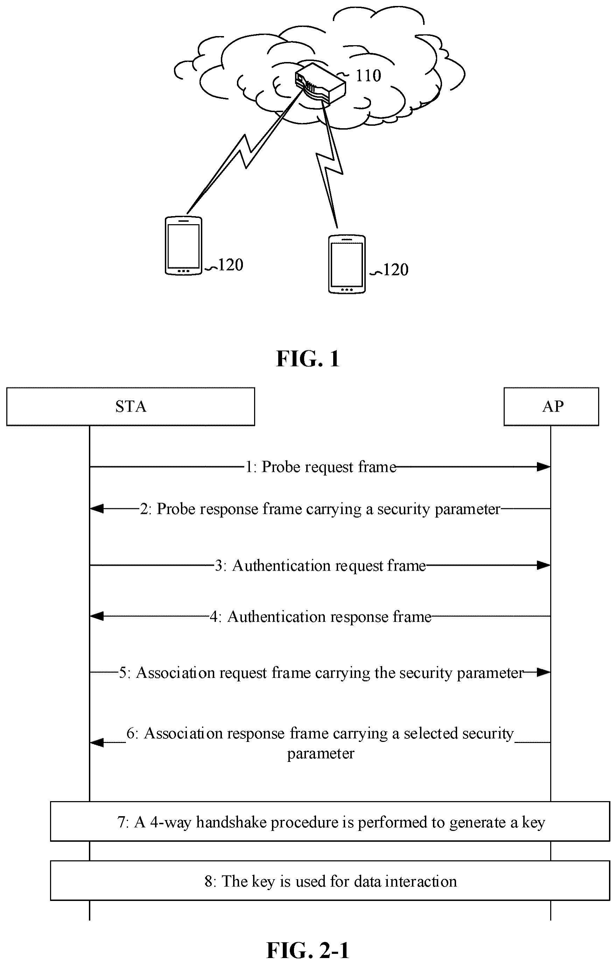

FIG. 1 is an architecture example of a communication system applied in an embodiment of the disclosure.

As illustrated in FIG. 1, the communication system may include an AP 110, and a STA 120 that accesses the network through the AP 110. In some scenarios, the AP 110 may be referred to as an AP STA, i.e., the AP 110 is also a STA in a sense. In some scenarios, the STA 120 may be referred to as a non-AP STA. In some scenarios, the STA 120 may include an AP STA and a non-AP STA. Communication in the communication system may include: communication between the AP 110 and the STA 120, communication between the STA 120 and another STA 120, or communication between the STA 120 and a peer STA. Here, the peer STA refers to a device that communicates with a peer of the STA 120, for example, the peer STA may be an AP or a non-AP STA.

The AP 110 may serve as a bridge connecting a wired network and a wireless network, and its primary function is to link various wireless network clients together, and then integrate the wireless network into the Ethernet. The AP 110 may be a terminal device (such as a mobile phone) or a network device (such as a router) with a WiFi chip.

It should be noted that, the role of the STA 120 in the communication system is not absolute. That is to say, the role of STA 120 in the communication system may be switched between the AP and the STA. For example, in some scenarios, when a mobile phone is connected to a router, the mobile phone acts as an STA, and when a mobile phone serves as a hotspot for another mobile phone, the mobile phone acts as an AP.

In some embodiments, the AP 110 and the STA 120 may be devices applied in the internet of vehicles, IoT nodes, sensors and the like in the internet of things (IoT), smart cameras, smart remote controls, smart water/electricity meters and the like in smart homes, as well as sensors and the like in smart cities.

In some embodiments, the AP 110 may be a device that supports the 802.11be standard. The AP may also be a device that supports various current and future WLAN standards from the 802.11 family, including 802.11ax, 802.11ac, 802.11n, 802.11g, 802.11b, and 802.11a. In some embodiments, the STA 120 may support the 802.11be standard. The STA may also support various current and future WLAN standards from the 802.11 family, including 802.11ax, 802.11ac, 802.11n, 802.11g, 802.11b, and 802.11a.

In some embodiments, the AP 110 and/or the STA 120 may be deployed on land, including indoor or outdoor, handheld, wearable or vehicle-mounted. The AP 110 and/or the STA 120 may also be deployed on the water (such as ships). The AP 110 and/or the STA 120 may also be deployed in the air (e.g. on aircraft, balloons and satellites, etc.).

In some embodiments, the STA 120 may be a device that supports WLAN/WiFi technology, such as a mobile phone, a Pad, a computer with a wireless transceiver function, a virtual reality (VR) device, or an augmented reality (AR) device, a wireless device or a set-top box in industrial control, a wireless device or a vehicle-mounted communication device in self driving, a wireless terminal device in remote medical, a wireless device in smart grid, a wireless terminal device in transportation safety, a wireless device in smart city, a wireless terminal device in smart home, a vehicle-mounted communication device, a wireless communication chip/an application specific integrated circuit (ASIC)/a system on chip (SoC), and the like.

Exemplary, the STA 120 may also be a wearable device. The wearable device may also be referred to as a wearable smart device, which is a general term of wearable devices that are intelligently designed and developed by applying wearable technologies to daily wear, such as glasses, gloves, watches, clothing and shoes. The wearable device is a portable device that is worn directly on the body or integrated into the user's clothes or accessories. The wearable device is not only a hardware device, but also realizes powerful functions through software support, data interaction and cloud interaction. Generalized wearable smart devices have full functions and large size, and may realize complete or partial functions without relying on smart phones, such as smart watches or smart glasses, as well as those that only focus on a certain type of application functions and need to be used in conjunction with other devices such as smart phones, such as various smart bracelets and smart jewelry for physical sign monitoring.

It is to be understood that FIG. 1 is only an example of the disclosure, and should not be construed as a limitation of the disclosure. For example, FIG. 1 only exemplifies one AP and two STAs. In some embodiments, the communication system may include multiple AP as well as another number of STAs, which is not limited in the embodiment of the disclosure.

It is to be noted that, FIG. 1 illustrates, by way of example only, the system to which the disclosure is applicable, although the method illustrated in the embodiments of the disclosure may also be applied to other systems. Furthermore, the terms "system" and "network" are generally used interchangeably herein. In this context, the term "and/or" merely indicates an association relationship for describing associated objects, and represents that there are three kinds of relationships. For example, "A and/or B" may represent three situations, i.e., independent existence of A, existence of both A and B, and independent existence of B. Additionally, the character "/" herein generally represents that the previous and next objects form a kind of "or" relationship. It is also to be understood that "indicate/indication" mentioned in the embodiments of the disclosure may be a direct indication, or may be an indirect indication, or may represent that there is an association relationship. For example, A indicates B, which may represent that A indicates B directly, for example, B may be acquired through A; or, may represent A indicate B indirectly, for example, A indicates C, and B may be acquired through C; or may represent that there is an association relationship between A and B. It is also to be understood that "correspond/correspondence" mentioned in the embodiment of the disclosure may represent that there is a direct or indirect correspondence between the two objects; or, may represent that there is an association relationship between two objects; or, may be a relationship such as indicating and being indicated, configuring and being configured, etc. It is also to be understood that "predefined/predefinition" or "predefined rule" mentioned in the embodiments of the disclosure may be implemented by storing corresponding codes, tables, or other means which may be used to indicate relevant information in advance within a device (including, for example, a terminal device and a network device), the specific implementation thereof are not be limited in the disclosure. For example, "predefined" may be "defined in a protocol".

For convenience of understanding of technical solutions in the embodiments of the disclosure, the related technologies of the embodiments of the disclosure will be elaborated below. The following related technologies, as optional solutions, may be arbitrarily combined with the technical solutions in the embodiments of the disclosure, all of which belong to the scope of protection of the embodiments of the disclosure.

The zero-power communication uses power harvesting and back scattering communication technologies. A zero-power communication system includes a network device and a zero-power terminal. The network device is configured for transmitting, to the zero-power terminal, a power supply signal and a downlink communication signal, and receiving a back scattered signal from the zero-power terminal. As an example, the zero-power terminal includes a power harvesting module, a back scattering communication module, and a low power computing module. In addition, the zero-power terminal may also be provided with a memory and/or a sensor, the memory is configured to store some basic information (such as item identifier, etc.), and the sensor is configured to acquire sensing data such as ambient temperature, ambient humidity, etc.

Based on the energy sources and usage manners of the zero-power terminals, the zero-power terminals may be classified into the following types.

### (1) Passive zero-power terminal

The zero-power terminal does not require a built-in battery. When the zero-power terminal approaches the network device, the zero-power terminal is in the near-field range formed by the radiation of the antenna of the network device. Therefore, the antenna of the zero-power terminal generates an induced current through electromagnetic induction, and the induced current drives the low power computing module (that is, the low power chip circuit) of the zero-power terminal to operate, thereby realizing the demodulation of the forward link signal and the modulation of the backward link signal. For the back scattering link, the zero-power terminal performs signal transmission through the back scattering.

It can be seen that the passive zero-power terminal does not require a built-in battery to drive neither the forward link nor the backward link, and thus, it is a real zero-power terminal.

Since the passive zero-power terminal does not require batteries, the RF circuit and baseband circuit of the passive zero-power terminal are very simple. For example, the passive zero-power terminal does not require a low noise amplifier (LNA), power amplifier (PA), crystal oscillator, ADC, etc., and thus has many advantages such as small size, light weight, low price and long service life, etc.

### (2) Semi-passive zero-power terminal

The semi-passive zero-power terminal itself is not equipped with a conventional battery, but it may use the power harvesting module to harvest energy of radio waves and store the harvested energy in an energy storage unit (such as a capacitor). After obtaining energy, the energy storage unit may drive the low power computing module (that is, the low power chip circuit) of the zero-power terminal to operate, thereby realizing the demodulation of the forward link signal and the modulation of the backward link signal. For the back scattering link, the zero-power terminal performs signal transmission through the back scattering.

It can be seen that the semi-passive zero-power terminal does not require a built-in battery to drive neither the forward link nor the backward link. Although the energy stored in the capacitor is used in the operation, the energy comes from the energy of radio waves harvested by the power harvesting module, and thus, the semi-passive zero-power terminal is also a real zero-power terminal.

The semi-passive zero-power terminal inherits many advantages of the passive zero-power terminal, and thus has many advantages such as small size, light weight, low price and long service life, etc.

### (3) Active zero-power terminal

The zero-power terminal used in some scenarios may also be an active zero-power terminal, which has a built-in battery. The battery is used to drive the low power computing module (that is, the low power chip circuit) of the zero-power terminal to operate, thereby realizing the demodulation of the forward link signal and the modulation of the backward link signal. However, for the back scattering link, the zero-power terminal performs signal transmission through the back scattering. Therefore, the zero power of this type of terminal is mainly reflected in the fact that the signal transmission in the back scattering link does not require power from the terminal itself, but instead uses the back scattering.

The active zero-power terminal has the built-in battery to supply power to radio frequency chip, so that communication distance is increased and communication reliability is improved. Therefore, it may be applied in some scenarios that have relatively high requirements in terms of communication distance and communication latency.

With the increase of industry applications, there are more and more types and application scenarios of connected objects, and there will be higher requirements in terms of the cost and power consumption of communication devices. The application of battery-free and low-cost passive IoT devices has become the key technology of cellular IoT, thereby enriching the types and quantities of networked terminals and truly realizing the Internet of Everything. The IoT device may be extended based on zero-power communication technologies, such as radio frequency identification (RFID) technology, to be suitable for cellular loT.

The energy of passive IoT devices may be sourced from the environment, and such devices are referred to as ambient power-enabled IoT (AMP IoT) devices. The energy required for the operation of such devices is sourced from ambient energy harvesting, and the source of ambient energy may be wireless signals, solar energy, thermal energy, etc. The passive zero-power terminal or semi-passive zero-power terminal in zero-power communication is a typical passive IoT device. The AMP IoT devices may be deployed in NR systems or WiFi systems.

In some scenarios, the data transmission of the AMP IoT device is a small packet data transmission, and may be a single-packet small packet data transmission. For example, in a logistics scenario, the IoT device is required to report the ID number thereof for logistics inventory. Moreover, after one data report is performed, there is long time before performing the next data report.

In a WiFi system, before data interaction between an IoT device as an STA and an AP, it needs to perform a series of signaling procedures, such as a scanning procedure, an authentication procedure, an association procedure and a key generation procedure. There are two manners for performing the scanning procedure: active scanning and passive scanning. The active scanning refers to that the STA actively detects and searches the AP. The passive scanning refers to that the STA only receives the wireless signal from the AP passively.

FIG. 2-1 illustrates a schematic diagram of interaction between an AP and an STA based on the active scanning, and the interaction includes the following operations.
1. The STA transmits a probe request frame to the AP.
2. The STA receives a probe response frame from the AP, and the probe response frame carries a security parameter.
3. The STA transmits an authentication request frame to the AP.
4. The STA receives an authentication response frame from the AP.
5. The STA transmits an association request frame to the AP, and the association request frame carries the security parameter.
6. The STA receives an association response frame from the AP, and the association response frame carries a selected security parameter.
7. The STA and the AP perform a 4-step handshake procedure to generate a key.
8. The STA and the AP perform data interaction by using the key.

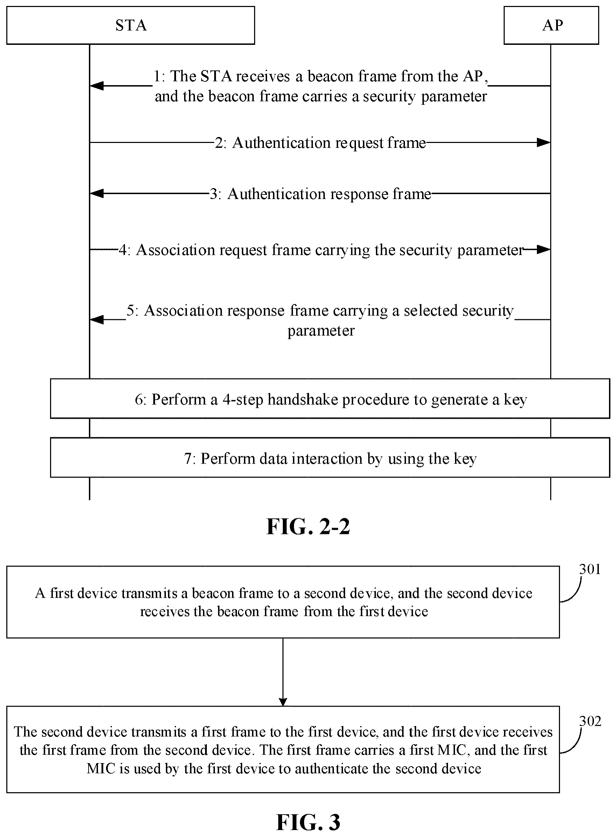

FIG. 2-2 illustrates a schematic diagram of interaction between an AP and an STA based on the passive scanning, and the interaction includes the following operations.
1. The STA receives a beacon frame from the AP, and the beacon frame carries a security parameter.
2. The STA transmits an authentication request frame to the AP.
3. The STA receives an authentication response frame from the AP.
4. The STA transmits an association request frame to the AP, and the association request frame carries the security parameter.
5. The STA receives an association response frame from the AP, and the association response frame carries a selected security parameter.
6. The STA and the AP perform a 4-step handshake procedure to generate a key.
7. The STA and the AP perform data interaction by using the key.

The STA may acquire the basic configuration information of the AP through the scanning procedure, the STA may complete link authentication with the AP through the authentication procedure, the STA may complete the association with the AP through the association procedure, and the STA may acquire the key used in the communication process through the key generation procedure (i.e., the 4-step handshake procedure). So far, data transmission and reception may be performed between the STA and the AP.

For the AMP IoT device as a STA, after being associated with an AP, the AP assigns an association ID (AID) to identify the STA. There may be some problems in this process. 1) The value range of the AID is limited, for example, from 1 to 2007, that is, an AP may be associated with up to 2007 STAs. It can be seen that the AID with limited capacity cannot meet the scenario of massive AMP IoT devices. 2) The data transmission of the AMP IoT devices is mostly the small packet data transmission, and it may be a single-packet small packet data transmission, and the transmission frequency will not be very high (for example, after performing one uplink transmission, the AMP IoT devices needs a certain period to harvest energy before it performs the next uplink transmission). After one data report is performed, the STA may need to wait for a significantly long time before performing the next data report. If the AP does not receive the information from the STA within a certain period of time, it is considered that the STA has lost contact, and therefore, the STA is not always associated with the AP. When the next data report is to be performed, the STA needs to re-perform a series of signaling procedures (such as the scanning procedure, the authentication procedure, the association procedure and the key generation procedure). 3) In some scenarios, such as the logistics scenario, after logistics transition, logistics inventory is required. For each logistics inventory, there is a high probability that the AP has changed. Therefore, after each logistics inventory, the STA does not need to be associated with the AP any more. During each inventory, the STA encounters a new AP, and for the new AP, the STA needs to perform a series of signaling procedures (such as the scanning procedure, the authentication procedure, the association procedure and the key generation procedure). It can be seen that the current communication procedure between the STA and the AP is not applicable to the AMP IoT devices, and the communication procedure between the STA and the AP needs to be simplified. Therefore, the following technical solutions in embodiments of the disclosure are provided.

For convenience of understanding of technical solutions in the embodiments of the disclosure, the technical solutions in the disclosure are described in detail by way of specific embodiments below. The above related technologies, as alternatives, may be arbitrarily combined with the technical solutions in the embodiments of the disclosure, all of which belong to the scope of protection of the embodiments of the disclosure. The embodiments of the disclosure include at least some of the following contents.

FIG. 3 is a schematic flowchart of a communication method according to an embodiment of the disclosure. As illustrated in FIG. 3, the communication method includes the following operations.

At operation 301, a first device transmits a beacon frame to a second device, and the second device receives the beacon frame from the first device.

At operation 302, the second device transmits a first frame to the first device, and the first device receives the first frame from the second device. The first frame carries a first MIC, and the first MIC is used by the first device to authenticate the second device.

In the embodiment of the disclosure, the first device is an AP, and the second device is an STA. The architecture of the communication system including the first device and the second device is illustrated with reference to FIG. 1.

In some implementations, the second device is an ambient energy-based communication device, such as an AMP IoT device, and the type of ambient energy may be wireless signals, solar energy, thermal energy, etc. In some implementations, the second device may also be a zero-power-consumption terminal, or a terminal that supports back scattering communication.

In the embodiment of the disclosure, the second device receives the beacon frame from the first device, and the beacon frame is used to announce the presence of the first device or a network covered by the first device. The first device may transmit the beacon frame periodically. The beacon frame carries basic configuration information of the first device, so that the second device may acquire the basic configuration information of the first device, such as a name of the AP, an MAC address of the AP, a BSSID of the AP, a capability supported by the AP, and the like.

In the embodiment of the disclosure, after receiving the beacon frame from the first device, if the second device intends to access the first device or initiate data interaction with the first device, the second device transmits the first frame to the first device. In some implementations, the first frame is an association request frame or a new frame. The first frame carries a first MIC, and the first MIC is used by the first device to authenticate the second device.

Herein, the first MIC is generated by the second device based on at least one parameter, the at least one parameter includes at least one of: a first random number, a second random number, or a pre-shared key (PSK). The first random number is a random number generated by the first device, denoted as Anonce. The second random number is a random number generated by the second device, denoted as SNonce. The PSK is a password for accessing the first device, which is configured by the administrator of the first device and shared with the user of the second device. The following are several methods for the second device to generate the first MIC.
Method 1-1: the second device generates the first MIC based on the first random number and the PSK.
Method 1-2: the second device generates the first MIC based on the second random number and the PSK.
Method 1-3: the second device generates the first MIC based on the first random number, the second random number, and the PSK.
Method 1-4: the second device generates the first MIC based on the first random number.
Method 1-5: the second device generates the first MIC based on the second random number.
Method 1-6: the second device generates the first MIC based on the first random number and the second random number.

In the above-described methods 1-1 to 1-3, the first MIC is generated based on the PSK, and thus, the above-described methods are applicable to a case where the first device has set the access password (that is, the PSK).

In the above-described methods 1-4 to 1-5, the generation of the first MIC is independent of the PSK, and thus, the above-described methods are applicable to a case where the first device has not set the access password (that is, the PSK).

In some implementations, when the at least one parameter includes the first random number, the beacon frame carries the first random number. Herein, the first random number is generated by the first device. In order for the second device to acquire the first random number, the first device carries the first random number in the beacon frame to be transmitted, so that the second device may acquire the first random number from the beacon frame, and then the second device may generate the first MIC based on the first random number. The method of generating the first MIC may be, for example, any one of the above-described methods 1-1, 1-3, 1-4, or 1-6.

In some implementations, in a case where the at least one parameter includes the second random number, the first frame also carries the second random number. Herein, the second random number is generated by the second device, and the second device may generate the first MIC based on the second random number, and the method of generating the first MIC may be, for example, any one of the above-described methods 1-2, 1-3, 1-5, or 1-6. Furthermore, in order for the first device to acquire the second random number, the second device carries the second random number in the first frame to be transmitted, so that the first device may acquire the second random number from the first frame, and then the first device may generate the second MIC based on the second random number.

In some implementations, the communication method in an embodiment of the disclosure may further include the following operations.

The first device generates a second MIC based on the at least one parameter, and the first device authenticates the second device by determining whether the second MIC is the same as the first MIC.

Herein, if the second MIC is the same as the first MIC, it indicates that the authentication of the second device succeeds. If the second MIC is not the same as the first MIC, it indicates that the authentication of the second device fails.

It should be noted that, the MIC generated by the second device is called the first MIC, correspondingly, the MIC generated by the first device is called the second MIC, and the security algorithm (or alternatively described as a security parameter) used by the second device to generate the MIC needs to be the same as the security algorithm used by the first device to generate the MIC, that is, the parameters based on which the second device and the first device generate the MIC need to be the same.

In some implementations, the security algorithm used by the first device and the second device is agreed upon in a protocol, and the security algorithm is used for the generation of the MIC.

In some implementations, the security algorithm used by the first device and the second device is selected by the first device, and the security algorithm is used for the generation of the MIC.

In a case where the security algorithm used by the first device and the second device is selected by the first device, the beacon frame carries the security algorithm selected by the first device. In this way, the first device may notify the second device of the selected security algorithm through the beacon frame, thereby ensuring that the security algorithm (or alternatively described as the security parameter) used by the second device to generate the MIC is the same as the security algorithm used by the first device to generate the MIC.

In some implementations, the security algorithm used by the first device and the second device is selected by the second device, and the security algorithm is used for the generation of the MIC.

In a case where the security algorithm used by the first device and the second device is selected by the second device, the first frame carries the security algorithm selected by the second device. In this way, the second device may notify the first device of the selected security algorithm through the first frame, thereby ensuring that the security algorithm (or alternatively described as the security parameter) used by the second device to generate the MIC is the same as the security algorithm used by the first device to generate the MIC.

In some implementations, in a case where the security algorithm used by the first device and the second device is selected by the second device, the beacon frame carries a list of security algorithms supported by the first device. In this way, the first device may notify the second device of the list of security algorithms supported by the first device through the beacon frame. The second device may select a security algorithm in the list of security algorithms (for example, select a security algorithm supported by the second device and/or select an optimal security algorithm), and notify the first device of the security algorithm selected by the second device through the first frame, thereby ensuring that the security algorithm (or alternatively described as the security parameter) used by the second device used by the second device to generate the MIC needs to be the same with the security algorithm used by the first device to generate the MIC.

In order to understand technical solutions in embodiments of the disclosure more clearly, a method of generating an MIC is given below (such as the above method 1-3). It should be noted that, technical solutions in embodiments of the disclosure are not limited to the following generation method.

The first random number is a random number generated by the first device, denoted as ANonce. The second random number is a random number generated by the second device, denoted as SNonce. The PSK is a password for accessing the first device, which is set by the administrator of the first device and shared with the user of the second device.
1) A PMK (Pairwise Master Key) is generated.
   The PMK is calculated based on a SSID and the PSK through a hash algorithm, and the SSID is the name of the AP.
2) A PTK (Pairwise Transient Key) is generated.
   The PTK is calculated based on the PMK, the ANonce and the Snonce through a random function.
3) The MIC is generated.

The MIC is calculated based on the first N bits (such as the first 16 bits) of the PTK through a hash algorithm.

The MIC is used for integrity protection and/or integrity verification of the message.

In the embodiment of the disclosure, the second device may report data to the first device, and the data may be, but is not limited to, small packet data. For example, the second device reports to the first device the ID of the second device, environmental data collected by the second device, and the like.

Based on the above procedure, there are several methods for the second device to report data to the first device.

### Scheme 1

In some implementations, the first frame also carries data with security protected by the first MIC. That is to say, when the second device transmits the first frame to the first device, the data with security protected by the first MIC is carried in the first frame for reporting. The first device generates a second MIC after receiving the first frame, and the first device authenticates the second device by determining whether the second MIC is the same as the first MIC. The first device acquires data in the first frame upon successful authentication of the second device.

Furthermore, in some implementations, the first device transmits a second frame to the second device after acquiring the data in the first frame, and the second device receives the second frame from the first device. The second frame indicates that the first device acknowledges correct reception of the data. In some implementations, the second frame is an association response frame or an acknowledgment frame.

The above-mentioned data transmission procedure does not essentially cover the association procedure (or alternatively does not cover the complete association procedure), and thus can be referred to as an association-free data transmission procedure.

### Scheme 2

In some implementations, the first device generates a second MIC after receiving the first frame, and the first device authenticates the second device by determining whether the second MIC is the same as the first MIC. The first device transmits a third frame to the second device upon successful authentication of the second device, and the second device receives the third frame from the first device. The third frame carries a second MIC, and the second MIC is used by the second device to authenticate the first device. In some implementations, the third frame is an association response frame.

Furthermore, in some implementations, the second device transmits data with security protected by the first MIC to the first device upon successful authentication of the first device, and the first device receives and acquires the data with security protected by the first MIC from the second device.

The above-mentioned data transmission procedure essentially covers the association procedure, and thus can be referred to as an association-based data transmission procedure.

With the technical solutions in the embodiments of the disclosure, the information interaction between the STA and the AP is reduced as much as possible, and a minimalist communication procedure is implemented, which is applicable to scenarios where an ambient energy-based communication device is used as STA. On the one hand, it is applicable to a scenario of a large number of STAs, and on the other hand, it is applicable to a scenario of energy-limited STAs.

The technical solutions in the embodiments of the disclosure are exemplified in combination with specific application examples below. In the following application examples, the first device is an AP, and the second device is an STA.

### Application Example 1

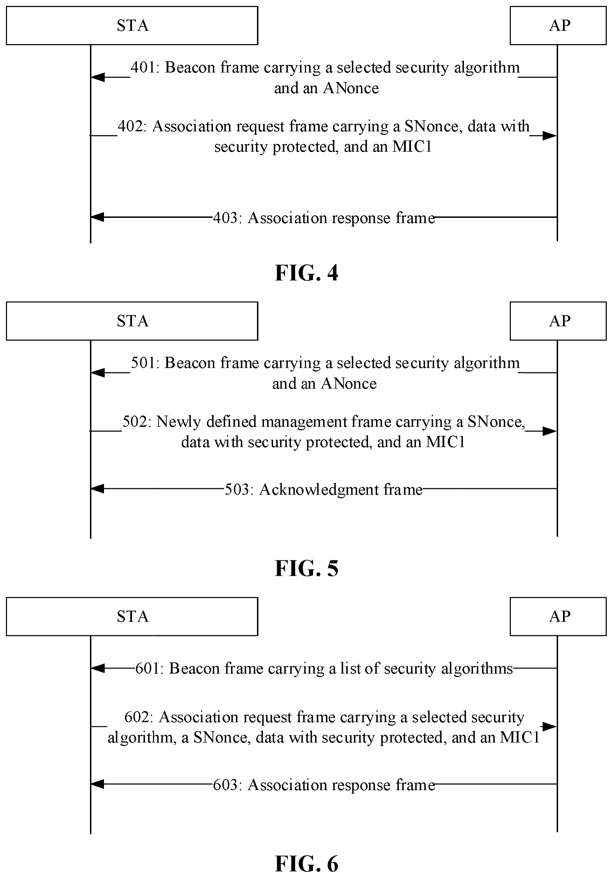

FIG. 4 is a schematic flowchart of a communication method according to an embodiment of the disclosure. As illustrated in FIG. 4, the communication method includes the following operations.

At operation 401, an AP transmits a beacon frame to a STA, and the beacon frame carries a selected security algorithm and an ANonce.

Herein, the selected security algorithm is the security algorithm selected by the AP.

Herein, the ANonce is a random number generated by the AP.

In an embodiment, the beacon frame may also carry information for authenticating the AP, and the information is used for the STA to authenticate the AP.

At operation 402, the STA transmits an association request frame to the AP, and the association request frame carries a SNonce, data with security protected, and an MIC1.

Herein, the STA determines a PSK, generates, by using the selected security algorithm, a PTK1 based on the ANonce, the SNonce, and the PSK, and then generates the MIC1 based on the PTK1. Security protection is performed on the data by using the MIC1, to obtain the data with security protected.

At operation 403, the AP authenticates the STA, acquires data upon successful authentication, and transmits an association response frame to the STA, so as to indicate correct reception of the data.

Herein, the AP acquires the SNonce after receiving the association request frame, generates, by using the selected security algorithm, a PTK2 based on the ANonce, the SNonce, and the PSK, and then generates the MIC2 based on the PTK2. The STA is authenticated by determining whether the MIC2 is the same as the MIC1. If the MIC2 is the same as the MIC1, the authentication succeeds. If the MIC2 is not the same as the MIC1, the authentication fails.

### Application Example 2

FIG. 5 is a schematic flowchart of a communication method according to an embodiment of the disclosure. As illustrated in FIG. 5, the communication method includes the following operations.

At operation 501, an AP transmits a beacon frame to a STA, and the beacon frame carries a selected security algorithm and an ANonce.

Herein, the selected security algorithm is the security algorithm selected by the AP.

Herein, the ANonce is a random number generated by the AP.

In an embodiment, the beacon frame may also carry information for authenticating the AP, and the information is used for the STA to authenticate the AP.

At operation 502, the STA transmits a newly defined management frame to the AP, and the newly defined management frame carries a SNonce, data with security protected, and an MIC1.

Herein, the STA determines a PSK, generates, by using the selected security algorithm, a PTK1 based on the ANonce, the SNonce, and the PSK, and then generates the MIC1 based on the PTK1. Security protection is performed on the data by using the MIC1, to obtain the data with security protected.

At operation 503, the AP authenticates the STA, acquires data upon successful authentication, and transmits an acknowledgment frame to the STA, so as to indicate correct reception of the data.

Herein, the AP acquires the SNonce after receiving the newly defined management frame, generates, by using the selected security algorithm, a PTK2 based on the ANonce, the SNonce, and the PSK, and then generates the MIC2 based on the PTK2. The STA is authenticated by determining whether the MIC2 is the same as the MIC1. If the MIC2 is the same as the MIC1, the authentication succeeds. If the MIC2 is not the same as the MIC1, the authentication fails.

### Application Example 3

FIG. 6 is a schematic flowchart of a communication method according to an embodiment of the disclosure. As illustrated in FIG. 6, the communication method includes the following operations.

At operation 601, an AP transmits a beacon frame to a STA, and the beacon frame carries a list of security algorithms.

Herein, the list of security algorithms may be a list of security algorithms supported by the AP or a list of security algorithms from which a selection is to be made by the STA.

In an embodiment, the beacon frame may also carry information for authenticating the AP, and the information is used for the STA to authenticate the AP.

At operation 602, the STA transmits an association request frame to the AP, and the association request frame carries a selected security algorithm, a SNonce, data with security protected, and an MIC1.

Herein, the selected security algorithm is the security algorithm selected by the STA. The STA may select a security algorithm from the list of security algorithms provided by the AP.

Herein, the SNonce is a random number generated by the STA.

Herein, the STA determines a PSK, generates, by using the selected security algorithm, a PTK1 based on the SNonce and the PSK, and then generates the MIC1 based on the PTK1. Security protection is performed on the data by using the MIC1, to obtain the data with security protected.

At operation 603, the AP authenticates the STA, acquires data upon successful authentication, and transmits an association response frame to the STA, so as to indicate correct reception of the data.

Herein, the AP acquires the SNonce after receiving the association request frame, generates, by using the selected security algorithm, a PTK2 based on the SNonce and the PSK, and then generates the MIC2 based on the PTK2. The STA is authenticated by determining whether the MIC2 is the same as the MIC1. If the MIC2 is the same as the MIC1, the authentication succeeds. If the MIC2 is not the same as the MIC1, the authentication fails.

### Application Example 4

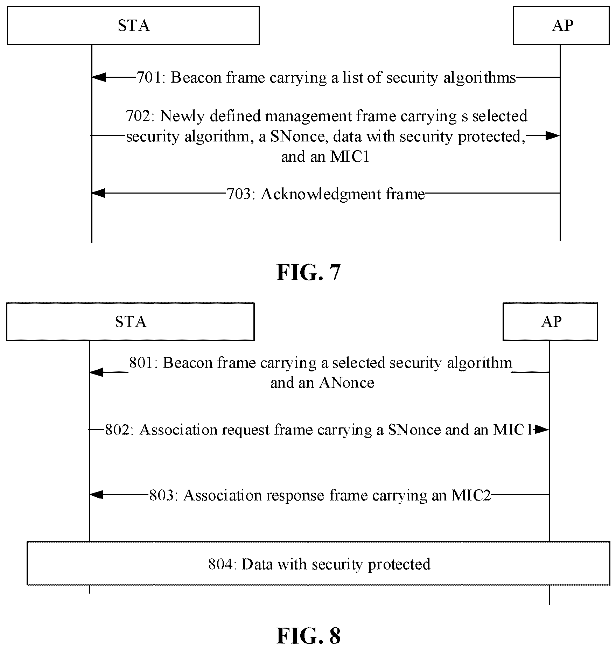

FIG. 7 is a schematic flowchart of a communication method according to an embodiment of the disclosure. As illustrated in FIG. 7, the communication method includes the following operations.

At operation 701, an AP transmits a beacon frame to a STA, and the beacon frame carries a list of security algorithms.

Herein, the list of security algorithms may be a list of security algorithms supported by the AP or a list of security algorithms from which a selection is to be made by the STA.

In an embodiment, the beacon frame may also carry information for authenticating the AP, and the information is used for the STA to authenticate the AP.

At operation 702, the STA transmits a newly defined management frame to the AP, and the newly defined management frame carries s selected security algorithm, a SNonce, data with security protected, and an MIC1.

Herein, the selected security algorithm is the security algorithm selected by the STA. The STA may select a security algorithm from the list of security algorithms provided by the AP.

Herein, the SNonce is a random number generated by the STA.

Herein, the STA determines a PSK, generates, by using the selected security algorithm, a PTK1 based on the SNonce and the PSK, and then generates the MIC1 based on the PTK1. The data is security protected by using the MIC1, to obtain the data with security protected.

At operation 703, the AP authenticates the STA, acquires data upon successful authentication, and transmits an acknowledgment frame to the STA, so as to indicate correct reception of the data.

Herein, the AP acquires the SNonce after receiving the newly defined management frame, generates, by using the selected security algorithm, a PTK2 based on the SNonce and the PSK, and then generates the MIC2 based on the PTK2. The STA is authenticated by determining whether the MIC2 is the same as the MIC1. If the MIC2 is the same as the MIC1, the authentication succeeds. If the MIC2 is not the same as the MIC1, the authentication fails.

### Application Example 5

FIG. 8 is a schematic flowchart of a communication method according to an embodiment of the disclosure. As illustrated in FIG. 8, the communication method includes the following operations.

At operation 801, an AP transmits a beacon frame to a STA, and the beacon frame carries a selected security algorithm and an ANonce.

Herein, the selected security algorithm is the security algorithm selected by the AP.

Herein, the ANonce is a random number generated by the AP.

In an embodiment, the beacon frame may also carry information for authenticating the AP, and the information is used for the STA to authenticate the AP.

At operation 802, the STA transmits an association request frame to the AP, and the association request frame carries a SNonce and an MIC1.

Herein, the SNonce is a random number generated by the STA.

Herein, the STA determines a PSK, generates, by using the selected security algorithm, a PTK1 based on the ANonce, the SNonce, and the PSK, and then generates the MIC1 based on the PTK1.

At operation 803, the AP authenticates the STA and transmits an association response frame to the STA upon successful authentication, and the association response frame carries an MIC2.

Herein, the AP acquires the SNonce after receiving the association request frame, generates, by using the selected security algorithm, a PTK2 based on the ANonce, the SNonce, and the PSK, and then generates the MIC2 based on the PTK2. The AP authenticates the STA by determining whether the MIC2 is the same as the MIC1. If the MIC2 is the same as the MIC1, the authentication succeeds. If the MIC2 is not the same as the MIC 1, the authentication fails.

At operation 804, the STA transmits data with security protected is performed between the STA and the AP.

Herein, after receiving the association response frame, the STA authenticates the AP by determining whether the MIC1 is the same as the MIC2. If the MIC1 is the same as the MIC2, the authentication succeeds. If the MIC1 is not the same as the MIC2, the authentication fails. The STA, upon successful authentication, performs security protection on the data by using the MIC1 and transmits the data with security protected to the AP.

### Application Example 6

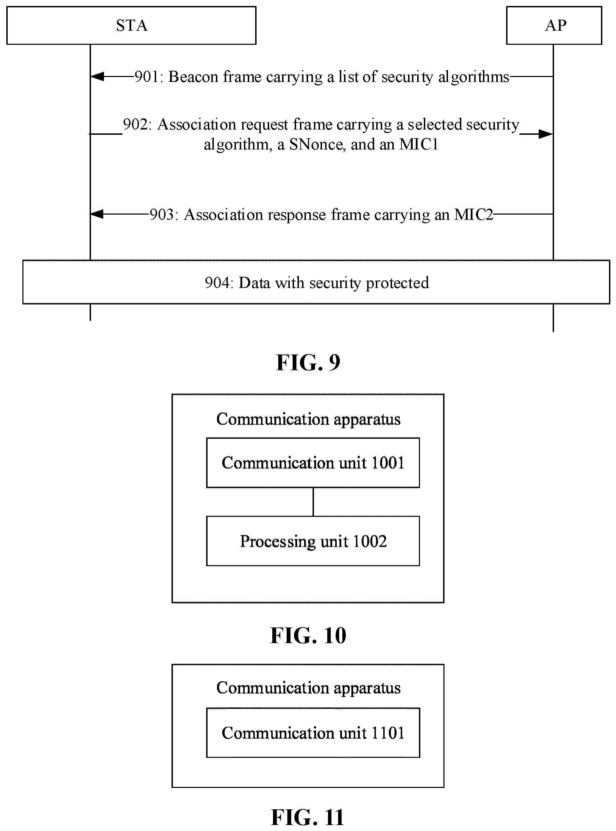

FIG. 9 is a schematic flowchart of a communication method according to an embodiment of the disclosure. As illustrated in FIG. 9, the communication method includes the following operations.

At operation 901, an AP transmits a beacon frame to a STA, and the beacon frame carries a list of security algorithms.

Herein, the list of security algorithms may be a list of security algorithms supported by the AP or a list of security algorithms from which a selection is to be made by the STA.

In an embodiment, the beacon frame may also carry information for authenticating the AP, and the information is used for the STA to authenticate the AP.

At operation 902, the STA transmits an association request frame to the AP, and the association request frame carries a selected security algorithm, a SNonce, and an MIC1.

Herein, the selected security algorithm is the security algorithm selected by the STA. The STA may select a security algorithm from the list of security algorithms provided by the AP.

Herein, the SNonce is a random number generated by the STA.

Herein, the STA determines a PSK, generates, by using the selected security algorithm, a PTK1 based on the SNonce and the PSK, and then generates the MIC1 based on the PTK1.

At operation 903, the AP authenticates the STA and transmits an association response frame to the STA upon successful authentication, and the association response frame carries an MIC2.

Herein, the AP acquires the SNonce after receiving the association request frame, generates, by using the selected security algorithm, a PTK2 based on the SNonce and the PSK, and then generates the MIC2 based on the PTK2. The STA is authenticated by determining whether the MIC2 is the same as the MIC1. If the MIC2 is the same as the MIC1, the authentication succeeds. If the MIC2 is not the same as the MIC1, the authentication fails.

At operation 904, transmission of data with security protected is performed between the STA and the AP.

Herein, after receiving the association response frame, the STA authenticates the AP by determining whether the MIC1 is the same as the MIC2. If the MIC1 is the same as the MIC2, the authentication succeeds. If the MIC1 is not the same as the MIC2, the authentication fails. The STA, upon successful authentication, performs security protection on the data by using the MIC1 and transmits the data with security protected to the AP.

With the technical solutions in the embodiments of the disclosure, a minimalist communication procedure is provided, which enables the AMP IoT devices in WiFi systems to perform data transmission conveniently. This procedure simplifies the interaction process during data transmission, and achieves efficient data transmission. At the same time, it meets the requirements of limited energy and small packet data transmission for AMP IoT devices.

The preferred implementations of the disclosure have been described in detail as above with reference to the accompanying drawings. However, the disclosure is not limited to the specific details in the above implementations. Within the scope of the technical concept of the disclosure, various simple modifications may be made to the technical solutions of the disclosure, and all these simple modifications belong to the scope of protection of the disclosure. For example, various specific technical features described in the above specific implementations may be combined in any suitable manner without contradiction. In order to avoid unnecessary repetition, various possible combination manners will not be described any more in the disclosure. For another example, various different implementations of the disclosure may also be combined arbitrarily, as long as they do not depart from the idea of the disclosure, which should also be considered as the contents disclosed in the disclosure. For another example, provided that there is no conflict, the embodiments and/or technical features within the embodiments described in the disclosure may be arbitrarily combined with related art. The technical solutions obtained after the combination should also fall within the scope of protection of the disclosure.

It should further be understood that, in various method embodiments of the disclosure, the values of the sequence numbers of the aforementioned processes do not imply the sequence of execution. The sequence of execution of the processes should be determined based on functions thereof and inherent logics, and the values of the sequence numbers should not constitute any limitation on the implementation processes of the embodiments of the disclosure. Furthermore, in the embodiments of the disclosure, the terms "downlink", "uplink" and "sidelink" are used to represent a transmission direction of a signal or data. Herein, the "downlink" is used to represent that the transmission direction of the signal or data is a first direction transmitted from a station to a user equipment of a cell; the "uplink" is used to represent that the transmission direction of the signal or data is a second direction transmitted from the user equipment of the cell to the station; and the "sidelink" is used to represent that the transmission direction of the signal or data is a third direction transmitted from a user equipment 1 to a user equipment 2. For example, a "downlink signal" represents that the signal is transmitted in the first direction. In addition, in the embodiments of the disclosure, the term "and/or" merely indicates an association relationship for describing associated objects, and represents that there are three kinds of relationships. Specifically, "A and/or B" may represent three situations, i.e., independent existence of A, existence of both A and B, and independent existence of B. Additionally, the forward slash "/" herein generally represents that the involved objects form an "or" relationship.

FIG. 10 is a first schematic diagram of the structure of the communication apparatus according to an embodiment of the disclosure, and the communication apparatus is applied to a first device. As illustrated in FIG. 10, the communication apparatus includes a communication unit 1001.

The communication unit 1001 is configured to: transmit a beacon frame to a second device, and receive a first frame from the second device. The first frame carries a first MIC, and the first MIC is used by the first device to authenticate the second device.

In some implementations, the first MIC is generated by the second device based on at least one parameter, and the at least one parameter includes at least one of: a first random number, a second random number, or a PSK. The first random number is a random number generated by the first device, the second random number is a random number generated by the second device, and the PSK is a password for accessing the first device.

In some implementations, in a case where the at least one parameter includes the first random number, the beacon frame carries the first random number.

In some implementations, in a case where the at least one parameter includes the second random number, the first frame also carries the second random number.

In some implementations, the apparatus further includes a processing unit 1002. The processing unit 1002 is configured to: generate a second MIC based on the at least one parameter, and authenticate the second device by determining whether the second MIC is the same as the first MIC.

In some implementations, the first frame further carries the data with security protected by the first MIC. The processing unit 1002 is configured to acquire the data in the first frame upon successful authentication of the second device.

In some implementations, the communication unit 1001 is configured to transmit a second frame to the second device. The second frame indicates that the first device acknowledges correct reception of the data.

In some implementations, the second frame is an association response frame or an acknowledgment frame.

In some implementations, the communication unit 1001 is configured to transmit a third frame to the second device upon successful authentication of the second device. The third frame carries a second MIC, and the second MIC is used by the second device to authenticate the first device.

In some implementations, the third frame is an association response frame.

In some implementations, the communication unit 1001 is configured to receive data with security protected by the first MIC from the second device.

In some implementations, the security algorithm used by the first device and the second device is agreed upon in a protocol. Alternatively, the security algorithm used by the first device and the second device is selected by the first device. Alternatively, the security algorithm used by the first device and the second device is selected by the second device. The security algorithm is used for generation of the MIC.

In some implementations, in a case where the security algorithm used by the first device and the second device is selected by the first device, the beacon frame carries the security algorithm selected by the first device.

In some implementations, in a case where the security algorithm used by the first device and the second device is selected by the second device, the first frame carries the security algorithm selected by the second device.

In some implementations, in a case where the security algorithm used by the first device and the second device is selected by the second device, the beacon frame carries a list of security algorithms supported by the first device.

In some implementations, the first frame is an association request frame.

In some implementations, the first device is an AP and the second device is an STA.

It is to be understood by those skilled in the art that the related description of the aforementioned communication apparatus in the embodiments of the disclosure may be understood with reference to the related description of the communication method in the embodiments of the disclosure.

FIG. 11 is a second schematic diagram of the structure of the communication apparatus according to an embodiment of the disclosure, and the communication apparatus is applied to a second device. As illustrated in FIG. 11, the communication apparatus includes a communication unit 1101.

The communication unit 1101 is configured to: receive a beacon frame from a first device, and transmit a first frame to the first device. The first frame carries a first MIC, and the first MIC is used by the first device to authenticate the second device.

In some implementations, the first MIC is generated by the second device based on at least one parameter, and the at least one parameter includes at least one of: a first random number, a second random number, or a PSK. The first random number is a random number generated by the first device, the second random number is a random number generated by the second device, and the PSK is a password for accessing the first device.

In some implementations, in a case where the at least one parameter includes the first random number, the beacon frame carries the first random number.

In some implementations, in a case where the at least one parameter includes the second random number, the first frame also carries the second random number.

In some implementations, the first frame also carries data with security protected by the first MIC.

In some implementations, the communication unit 1101 is configured to receive a second frame from the first device. The second frame indicates that the first device acknowledges correct reception of the data.

In some implementations, the second frame is an association response frame or an acknowledgment frame.

In some implementations, the communication unit 1101 is configured to receive a third frame from the first device. The third frame carries a second MIC, and the second MIC is used by the second device to authenticate the first device.

In some implementations, the third frame is an association response frame.

In some implementations, the communication unit 1101 is configured to transmit data with security protected by the first MIC to the first device upon successful authentication of the first device.

In some implementations, the security algorithm used by the first device and the second device is agreed upon in a protocol. Alternatively, the security algorithm used by the first device and the second device is selected by the first device. Alternatively, the security algorithm used by the first device and the second device is selected by the second device. The security algorithm is used for generation of the MIC.

In some implementations, in a case where the security algorithm used by the first device and the second device is selected by the first device, the beacon frame carries the security algorithm selected by the first device.

In some implementations, in a case where the security algorithm used by the first device and the second device is selected by the second device, the first frame carries the security algorithm selected by the second device.

In some implementations, in a case where the security algorithm used by the first device and the second device is selected by the second device, the beacon frame carries a list of security algorithms supported by the first device.

In some implementations, the first frame is an association request frame.

In some implementations, the first device is an AP and the second device is an STA.

It is to be understood by those skilled in the art that the related description of the aforementioned communication apparatus in the embodiments of the disclosure may be understood with reference to the related description of the communication method in the embodiments of the disclosure.

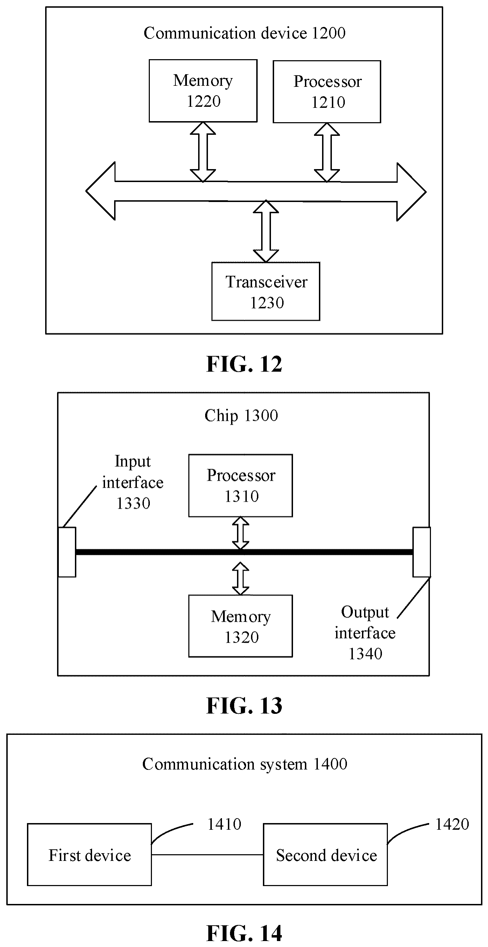

FIG. 12 is a schematic structural illustration of a communication device 1200 according to an embodiment of the disclosure. The communication device may be a first device or a second device. The communication device 1200 illustrated in FIG. 12 includes a processor 1210 that may call and execute a computer program from a memory to implement each of the methods in the embodiments of the disclosure.

In an embodiment, as illustrated in FIG. 12, the communication device 1200 may further include a memory 1220. The processor 1210 may call and execute a computer program from the memory 1220 to implement each of the methods in the embodiments of the disclosure.

The memory 1220 may be a separate device independent of the processor 1210, or may be integrated in the processor 1210.

In an embodiment, as illustrated in FIG. 12, the communication device 1200 may further include a transceiver 1230, and the processor 1210 may control the transceiver 1230 to communicate with other devices. Specifically, the transceiver may transmit information or data to other devices, or receive information or data from other devices.

The transceiver 1230 may include a transmitter and a receiver. The transceiver 1230 may further include one or more antennas.

In an embodiment, the communication device 1200 may specifically be the first device in the embodiments of the disclosure, and the communication device 1200 may implement corresponding processes implemented by the first device in each of the methods in the embodiments of the disclosure. For brevity, details will not be repeated herein again.

In an embodiment, the communication device 1200 may specifically be the second device in the embodiments of the disclosure, and the communication device 1200 may implement corresponding processes implemented by the second device in each of the methods in the embodiments of the disclosure. For brevity, details will not be repeated herein again.

FIG. 13 is a schematic structural illustration of a chip according to an embodiment of the disclosure. The chip 1300 illustrated in FIG. 13 includes a processor 1310 that may call and execute a computer program from a memory to implement each of the methods in the embodiments of the disclosure.

In an embodiment, as illustrated in FIG. 13, the chip 1300 may further include a memory 1320. The processor 1310 may call and execute a computer program from the memory 1320 to implement each of the methods in the embodiments of the disclosure.

The memory 1320 may be a separate device independent of the processor 1310, or may be integrated in the processor 1310.

In an embodiment, the chip 1300 may further include an input interface 1330. The processor 1310 may control the input interface 1330 to communicate with other devices or chips. Specifically, the input interface 1330 may acquire information or data from other devices or chips.

In an embodiment, the chip 1300 may further include an output interface 1340. The processor 1310 may control the output interface 1340 to communicate with other devices or chips. Specifically, the output interface 1340 may output information or data to other devices or chips.

In an embodiment, the chip may be applied to the first device in the embodiments of the disclosure, and the chip may implement corresponding processes implemented by the first device in each of the methods in the embodiments of the disclosure. For brevity, details will not be repeated herein again.

In an embodiment, the chip may be applied to the second device in the embodiments of the disclosure, and the chip may implement corresponding processes implemented by the second device in each of the methods in the embodiments of the disclosure. For brevity, details will not be repeated herein again.

It should be understood that the chip mentioned in the embodiments of the disclosure may also be referred to as a system-level chip, a system chip, a chip system, or a system-on-chip, etc.

FIG. 14 is a schematic block diagram of a communication system 1400 according to an embodiment of the disclosure. As illustrated in FIG. 14, the communication system 1400 includes a first device 1410 and a second device 1420.

The first device 1410 may be configured to implement the corresponding functions implemented by the terminal device in the foregoing method, and the second device 1420 may be configured to implement the corresponding functions implemented by the network device in the foregoing method. For brevity, details will not be repeated herein again.

It is to be understood that the processor in the embodiment of the disclosure may be an integrated circuit chip with a signal processing capability. In an implementation process, various operations of the aforementioned method embodiments may be completed by an integrated logic circuit of hardware or the instructions in the form of software in the processor. The processor described above may be a general-purpose processor, a digital signal processor (DSP), an application specific integrated circuit (ASIC), a field programmable gate array (FPGA) or another programmable logic device, discrete gate or transistor logic device, or discrete hardware component. Various methods, operations and logic block diagrams disclosed in the embodiments of the disclosure may be implemented or performed. The general-purpose processor may be a microprocessor, or may be any conventional processor or the like. The operations of the methods disclosed in the embodiments of the disclosure may be directly embodied to be executed and completed by a hardware decoding processor, or by a combination of hardware and software modules in the decoding processor. The software module may be located in a mature storage medium in the field, such as a random access memory (RAM), a flash memory, a read-only memory (ROM), a programmable ROM (PROM), or an electrically erasable programmable memory, a register, etc. The storage medium is located in the memory, and the processor reads information in the memory and completes the operations of the foregoing method in combination with its hardware.

It is understood that, in the embodiment of the disclosure, the memory may be a volatile memory or a non-volatile memory, or may include both the volatile memory and the non-volatile memory. The non-volatile memory may be a ROM, a PROM, an Erasable PROM (EPROM), an Electrically EPROM (EEPROM), or a flash memory. The volatile memory may be a RAM, which serves as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM) and a Direct Rambus RAM (DR RAM). It is to be noted that the memory of the systems and methods described herein is intended to include, but not limited to, memories of these and any other suitable types.

It is to be understood that the aforementioned memory is described only exemplarily rather than limitedly. For example, the memory in the embodiments of the disclosure may further be an SRAM, a DRAM, an SDRAM, a DDR SDRAM, an ESDRAM, an SLDRAM and a DR RAM, etc. That is, the memory in the embodiments of the disclosure is intended to include, but not limited to, memories of these and any other suitable types.

In the embodiments of the disclosure, a computer-readable storage medium having stored thereon a computer program is further provided.

In an embodiment, the computer-readable storage medium may be applied to the first device in the embodiments of the disclosure, and the computer program is executed to enable a computer to execute corresponding processes implemented by the first device in each of the methods in the embodiments of the disclosure. For brevity, details will not be repeated herein again.

Optionally, the computer-readable storage medium may be applied to the second device in the embodiments of the disclosure, and the computer program is executed to enable the computer to execute corresponding processes implemented by the second device in each of the methods in the embodiments of the disclosure. For brevity, details will not be repeated herein again.

In the embodiment of the disclosure, a computer program product having stored therein computer program instructions is further provided.

In an embodiment, the computer program product may be applied to the first device in the embodiments of the disclosure, and the computer program instructions cause the computer to execute corresponding processes implemented by the first device in each of the methods in the embodiments of the disclosure. For brevity, details will not be repeated herein again.

Optionally, the computer program product may be applied to the second device in the embodiments of the disclosure, and the computer program instructions cause the computer to execute corresponding processes implemented by the second device in each of methods in the embodiments of the disclosure. For brevity, details will not be repeated herein again.

In the embodiment of the disclosure, a computer program is further provided.

In an embodiment, the computer program may be applied to the first device in the embodiments of the disclosure. The computer program, when executed by a computer, causes the computer to execute corresponding processes implemented by the first device in each of methods in the embodiments of the disclosure. For brevity, details will not be repeated herein again.

Optionally, the computer program may be applied to the second device in the embodiments of the disclosure. The computer program, when executed by a computer, causes the computer to execute corresponding processes implemented by the second device in each of methods in the embodiments of the disclosure. For brevity, details will not be repeated herein again.

Those of ordinary skilled in the art may appreciate that the units and algorithmic operations of each of the examples described in the embodiments disclosed herein may be implemented in electronic hardware, or a combination of computer software and electronic hardware. Whether these functions are performed in hardware or software depends on the specific application and design constraints of the technical solutions. The professionals may use different methods to implement the described functions for each specific application, and such implementations shall not be considered as going beyond the scope of the disclosure.

Those skilled in the art may clearly understand that, for the specific working processes of the systems, devices, and units described above, reference may be made to the corresponding processes in the aforementioned method embodiments, which will not be repeated herein for convenience and conciseness of the description.

In several embodiments provided in the disclosure, it is to be understood that the disclosed systems, devices, and methods may be implemented in other ways. For example, the device embodiments described above are only schematic. For example, the partition of the unit is only a kind of logical functional partition, and other partition manners may be adopted during practical implementation. For example, multiple units or components may be combined or integrated into another system, or some features may be omitted or not implemented. In addition, coupling or direct coupling or communication connection between various displayed or discussed components may be indirect coupling or communication connection, implemented through some interfaces, devices or units, and may be an electrical or mechanical connection or in other forms.

The units described as separate components may or may not be physically separate, and the components displayed as units may or may not be physical units, that is, may be located in one place or be distributed to multiple network units. Part or all of the units may be selected based on the actual needs to achieve the purpose of the solution of the present embodiment.

Moreover, various functional units in the embodiments of the disclosure may be integrated into one processing unit, or they may be physically exist separately as individual units, or two or more units may be integrated into one unit.

The functions may be stored in a computer readable storage medium if implemented in the form of software functional units and sold or used as a stand-alone product. Based on such understanding, the essential part of the technical solutions of the disclosure or a part of the technical solutions that makes contributions over the related art or the part of the technical solutions may be embodied in a form of a software product. The software product is stored in a storage medium and includes instructions which cause a computer device (which may be a personal computer, a server, or a network device, etc.) to perform all or part of the operations in the methods described in various embodiments of the disclosure. The foregoing storage medium includes various media capable of storing program codes, such as a USB disk, a mobile hard disk, an ROM, an RAM, a magnetic disk, an optical disk, or the like.

The foregoing are only the specific implementations of the disclosure; however, the scope of protection of the disclosure is not limited thereto. Variations or replacements which can be readily conceived by those skilled in the art within the technical scope disclosed by the disclosure shall fall within the scope of protection of the disclosure. Therefore, the scope of protection of the disclosure shall be determined by the scope of protection of the claims.

## Claims

1. A communication method, comprising:
transmitting, by a first device, a beacon frame to a second device, and
receiving, by the first device, a first frame from the second device,
wherein the first frame carries a first message integrity code (MIC), and the first MIC is used by the first device to authenticate the second device.

2. The method of claim 1, wherein the first MIC is generated by the second device based on at least one parameter, the at least one parameter comprises at least one of: a first random number, a second random number, or a pre-shared key (PSK), the first random number is a random number generated by the first device, the second random number is a random number generated by the second device, and the PSK is a password for accessing the first device.

3. The method of claim 2, wherein in a case where the at least one parameter comprises the first random number, the beacon frame carries the first random number.

4. The method of claim 2 or 3, wherein in a case where the at least one parameter comprises the second random number, the first frame further carries the second random number.

5. The method of any one of claims 2 to 4, further comprising:
generating, by the first device based on the at least one parameter, a second MIC, and
authenticating, by the first device, the second device by determining whether the second MIC is the same as the first MIC.

6. The method of any one of claims 1 to 5, wherein the first frame further carries data with security protected by the first MIC, and the method further comprises:
acquiring, by the first device, data in the first frame upon successful authentication of the second device.

7. The method of claim 6, further comprising:
transmitting, by the first device, a second frame to the second device, wherein the second frame indicates that the first device acknowledges correct reception of the data.

8. The method of claim 7, wherein the second frame is an association response frame or an acknowledgment frame.

9. The method of any one of claims 1 to 5, further comprising:
transmitting, by the first device, a third frame to the second device upon successful authentication of the second device, wherein the third frame carries a second MIC, and the second MIC is used by the second device to authenticate the first device.

10. The method of claim 9, wherein the third frame is an association response frame.

11. The method of claim 9 or 10, wherein the method further comprises:
receiving, by the first device, data with security protected by the first MIC from the second device.

12. The method of any one of claims 1 to 11, wherein
a security algorithm used by the first device and the second device is agreed upon in a protocol; or
a security algorithm used by the first device and the second device is selected by the first device; or
a security algorithm used by the first device and the second device is selected by the second device;
wherein the security algorithm is used for generation of MIC.

13. The method of any one of claims 1 to 12, wherein in a case where a security algorithm used by the first device and the second device is selected by the first device, the beacon frame carries the security algorithm selected by the first device.

14. The method of any one of claims 1 to 12, wherein in a case where a security algorithm used by the first device and the second device is selected by the second device, the first frame carries the security algorithm selected by the second device.

15. The method of claim 14, wherein in a case where a security algorithm used by the first device and the second device is selected by the second device, the beacon frame carries a list of security algorithms supported by the first device.

16. The method of any one of claims 1 to 15, wherein the first frame is an association request frame.

17. The method of any one of claims 1 to 16, wherein the first device is an access point (AP), and the second device is a station (STA).

18. A communication method, comprising:
receiving, by a second device, a beacon frame from a first device, and
transmitting, by the second device, a first frame to the first device,
wherein the first frame carries a first message integrity code (MIC), and the first MIC is used by the first device to authenticate the second device.

19. The method of claim 18, wherein the first MIC is generated by the second device based on at least one parameter, the at least one parameter comprises at least one of: a first random number, a second random number, or a pre-shared key (PSK), the first random number is a random number generated by the first device, the second random number is a random number generated by the second device, and the PSK is a password for accessing the first device.

20. The method of claim 19, wherein in a case where the at least one parameter comprises the first random number, the beacon frame carries the first random number.

21. The method of claim 19 or 20, wherein in a case where the at least one parameter comprises the second random number, the first frame further carries the second random number.

22. The method of any one of claims 18 to 21, wherein the first frame further carries data with security protected by the first MIC.

23. The method of claim 22, further comprising:
receiving, by the second device, a second frame from the first device, wherein the second frame indicates that the first device acknowledges correct reception of the data.

24. The method of claim 23, wherein the second frame is an association response frame or an acknowledgment frame.

25. The method of any one of claims 18 to 21, further comprising:
receiving, by the second device, a third frame from the first device, wherein the third frame carries a second MIC, and the second MIC is used by the second device to authenticate the first device.

26. The method of claim 25, wherein the third frame is an association response frame.

27. The method of claim 25 or 26, wherein the method further comprises:
transmitting, by the second device, data with security protected by the first MIC to the first device upon successful authentication of the first device.

28. The method of any one of claims 18 to 27, wherein
a security algorithm used by the first device and the second device is agreed upon in a protocol; or
a security algorithm used by the first device and the second device is selected by the first device; or
a security algorithm used by the first device and the second device is selected by the second device;
wherein the security algorithm is used for generation of MIC.

29. The method of any one of claims 18 to 28, wherein in a case where a security algorithm used by the first device and the second device is selected by the first device, the beacon frame carries the security algorithm selected by the first device.

30. The method of any one of claims 18 to 28, wherein in a case where a security algorithm used by the first device and the second device is selected by the second device, the first frame carries the security algorithm selected by the second device.

31. The method of claim 30, wherein in a case where a security algorithm used by the first device and the second device is selected by the second device, the beacon frame carries a list of security algorithms supported by the first device.

32. The method of any one of claims 18 to 31, wherein the first frame is an association request frame.

33. The method of any one of claims 18 to 32, wherein the first device is an access point (AP), and the second device is a station (STA).

34. A communication apparatus, applied to a first device, the apparatus comprising:
a communication unit, configured to transmit a beacon frame to a second device, and receive a first frame from the second device, wherein the first frame carries a first message integrity code (MIC), and the first MIC is used by the first device to authenticate the second device.

35. A communication apparatus, applied to a second device, the apparatus comprising:
a communication unit, configured to receive a beacon frame from a first device, and transmit a first frame to the first device, wherein the first frame carries a first message integrity code (MIC), and the first MIC is used by the first device to authenticate the second device.

36. A terminal device, comprising: a processor and a memory, wherein the memory is configured to store a computer program, and the processor is configured to call and execute the computer program stored in the memory to cause the terminal device to perform the method of any one of claims 1 to 17 or the method of any one of claims 18 to 33.

37. A chip, comprising: a processor, configured to call and execute a computer program from a memory to cause a device on which the chip is mounted to perform the method of any one of claims 1 to 17 or the method of any one of claims 18 to 33.

38. A computer-readable storage medium having stored thereon a computer program that causes the computer to perform the method of any one of claims 1 to 17 or the method of any one of claims 18 to 33.

39. A computer program product having stored therein computer program instructions that cause a computer to perform the method of any one of claims 1 to 17 or the method of any one of claims 18 to 33.

40. A computer program that causes a computer to perform the method of any one of claims 1 to 17 or the method of any one of claims 18 to 33.
